# EUROPÄISCHE PATENTSCHRIFT

(11) **EP 0 628 442 B1**
(45) Veröffentlichungstag und Bekanntmachung des Hinweises auf die Patenterteilung: **27.09.1995**
(21) Anmeldenummer: 94102695.7
(22) Anmeldetag: 23.02.1994
(51) Int. Cl.: B60K 41/02, B60T 8/32

(54) **Anordnung zur Betätigung einer Reibungskupplung eines Kraftfahrzeugs**
Actuating system for a friction clutch of a motor vehicle
Dispositif d'actionnement d'un embrayage à friction d'un véhicule à moteur

(30) Priorität: 17.05.1993 DE 4316421
(43) Veröffentlichungstag der Anmeldung: 14.12.1994
(73) Patentinhaber: FICHTEL & SACHS AG, D-97424 Schweinfurt (DE)
(72) Erfinder: Kuhn, Thomas, D-97688 Bad Kissingen (DE); Reuthal, Rainer, D-97273 Kürnach (DE); Reiss, Karsten, D-97422 Schweinfurt (DE); Schneider, Hans-Jürgen, D-97440 Werneck-Stettbach (DE)

(56) Entgegenhaltungen:
- EP-A- 0 355 975
- EP-A- 0 435 833
- EP-B- 0 259 634
- DE-A- 3 528 389
- GB-A- 2 190 158

## Beschreibung

Die Erfindung betrifft eine Anordnung zur Betätigung einer Reibungskupplung eines von einer Brennkraftmaschine angetriebenen und mit einer Antriebsschlupfregelung ausgerüsteten Kraftfahrzeugs.

Herkömmliche Antriebsschlupfregelungen von Kraftfahrzeugen erfassen mit Hilfe von Drehzahlsensoren die Drehzahl sowohl der angetriebenen als auch der nicht angetriebenen Räder des Kraftfahrzeugs und mindern beispielsweise über ein Drosselklappenstellglied oder einen Einspritzpumpenregler die Antriebsleistung der Brennkraftmaschine bei bestehendem oder bei beginnendem Antriebsschlupf, um instabile Fahrsituationen, insbesondere Schleudern des Fahrzeugs, zu vermeiden. Gegebenenfalls können die Bremsen des Kraftfahrzeugs mit Bremsdruckstellern versehen sein, um zusätzlich das auf das schlupfende Antriebsrad wirkende Antriebsdrehmoment gegenüber den anderen Rädern zu mindern.

Es ist ferner bekannt, die Reibungskupplung eines Kraftfahrzeugs mittels eines Stellantriebs zu automatisieren, der von einer elektronischen Steuerung entsprechend der Betriebssituation sowohl beim Anfahren als auch beim Wechseln der Gänge eines Schaltgetriebes des Kraftfahrzeugs gesteuert wird. Die Steuerung spricht auf eine Vielzahl Sensoren an, die unterschiedliche Betriebsparameter, beispielsweise die Drehzahl der Brennkraftmaschine, die Eingangsdrehzahl des Schaltgetriebes, die Schaltstellung des Schaltgetriebes oder die Fahrgeschwindigkeit des Kraftfahrzeugs erfassen. Automatisierte Kupplungsbetätigungsanordnungen dieser Art sind beispielsweise aus der DE-A-39 35 438.5 und DE-A-39 35 439.5 bekannt.

Die Koordination derartiger automatischer Kupplungsbetätigungsanordnungen mit Antriebsschlupfregelungen herkömmlicher Art bereitet jedoch Schwierigkeiten, da in manchen Betriebssituationen die Kupplungssteuerung und die auf die Antriebsleistung der Brennkraftmaschine wirkende Antriebsschlupfregelung gegeneinander wirken können, womit es zu Betriebsstörungen kommen kann.

Aus der DE-A-35 28 389 ist eine Anordnung zur Regelung des Antriebsschlupfs eines Kraftfahrzeugs in Verbindung mit einer automatisierten Kupplungsbetätigungsanordnung bekannt, die diese Schwierigkeiten dadurch umgeht, daß die Antriebsschlupfregelung nicht auf ein Leistungsstellglied der Brennkraftmaschine wirkt, sondern für die Minderung des Antriebsmoments im Falle eines Antriebsschlupfs die Kupplung ganz oder teilweise öffnet.

Eine weitere automatisierte Kupplungsbetätigungseinrichtung bei einem mit einer Antriebsschlupfregelanordnung ausgerüsteten Kraftfahrzeug ist aus der EP-B-259 634 bekannt. Auch bei dieser Kupplungsbetätigungsanordnung wird die Kupplung beim Erfassen einer Antriebsschlupfsituation vollständig ausgekuppelt. Dies hat jedoch den Nachteil, daß bei Beendigung der Antriebsschlupfsituation eine gewisse Zeit vergeht, bevor die automatisiert betätigte Kupplung wieder eingekuppelt ist. Insbesondere in Fahrsituationen, in welchen die Antriebsleistung vom Fahrer bewußt erhöht wurde, beispielsweise um in einer Notsituation beschleunigen zu können, kann dies zu gefährlichen Fahrsituationen, in jedem Fall jedoch zu einer Komfortminderung führen.

Es ist Aufgabe der Erfindung, eine Kupplungsbetätigungsanordnung für ein mit einer Antriebsschlupfregelanordnung ausgerüstetes Kraftfahrzeug anzugeben, bei welchem das Betriebsverhalten des Kupplungsregelsystems und des Antriebsschlupfregelsystems sich im Betrieb gegenseitig nicht stören.

EP-A-355 975 offenbart eine Anordnung nach dem Oberbegriff des Anspruchs, nämlich eine Anordnung zur Betätigung einer Reibungskupplung eines von einer Brennkraftmaschine angetriebenen und mit einer Antriebsschlupfregelung ausgerüsteten Kraftfahrzeugs, welche umfaßt:
einen Stellantrieb für die Reibungskupplung,
mehrere auf Betriebsparameter des Kraftfahrzeugs, insbesondere die Drehzahl seiner Brennkraftmaschine und/oder die Eingangsdrehzahl und/oder Schaltstellung seines über die Reibungskupplung mit der Brennkraftmaschine gekuppelten Schaltgetriebes und/oder die Stellung seines Fahrpedals und/oder die Fahrgeschwindigkeit ansprechende Sensoren,
eine abhängig von den Sensoren mittels des Stellantriebs die Reibungskupplung auskuppelnde und sowohl beim Anfahren des Kraftfahrzeugs als auch beim Wechseln der Gänge des Schaltgetriebes selbsttätig einkuppelnde Kupplungssteuerung,
wobei die Antriebsschlupfregelanordnung eine mittels weiterer Sensoren, insbesondere Raddrehzahl-Sensoren, eine bestehende oder drohende Antriebsschlupfsituation erfaßt und hierauf ein erstes Steuersignal zur Verringerung der Antriebsleistung der Brennkraftmaschine sowie ein zweites Steuersignal an die Kupplungssteuerung abgibt.

Die erfindungsgemäße Verbesserung besteht darin, daß die Antriebsschlupfregelanordnung das zweite Steuersignal während der Dauer der Antriebsleistungsminderung abgibt und die Kupplungssteuerung während des Auftretens des zweiten Steuersignals den Stellantrieb entweder unabhängig von der mittels eines der Sensoren erfaßten Drehzahl der Brennkraftmaschine und/oder der Fahrgeschwindigkeit in der bei Beginn des zweiten Steuersignals bestehenden Stellung halt oder abhängig von den die Betriebsparameter erfassenden Sensoren mit einer, verglichen mit der Stellrate des Stellantriebs bei fehlendem zweiten Steuersignal verringerten Stellrate in die der Betriebssituation zugeordnete Stellung steuert.

In der ersten Alternative hält die Kupplungssteuerung den Stellantrieb und damit die Reibungskupplung in der Position, die bei Wirksamwerden des Antriebsschlupfregelsystems bestanden hat, und zwar unabhängig davon, ob aufgrund der mittels der Sensoren der Kupplungssteuerung überwachten Betriebssituation eine Änderung der Kupplungsstellung, beispielsweise ein Auskuppelvorgang zur Verhinderung des Abwürgens der Brennkraftmaschine erforderlich wäre. Hierdurch wird erreicht, daß ausschließlich das Antriebsschlupfregelsystem in der Fahrsituation wirksam ist. Das Antriebsschlupfregelsystem kann herkömmlich ausgebildet sein und auf das Leistungseinstellglied der Brennkraftmaschine, beispielsweise dessen Drosselklappe oder Einspritzpumpe wirken. Gegebenenfalls kann das Antriebsschlupfregelsystem auch zusätzlich in an sich bekannter Weise auf die Betriebsbremsen des Kraftfahrzeugs wirken. Da die Kupplungsstellung nicht verändert wird, vergeht nach Beendigung der Antriebsschlupfsituation keine Zeit, bis die Kupplung wieder erneut eingekuppelt ist.

In der zweiten Alternative wird die Stellrate, mit der die Kupplungssteuerung den Stellantrieb betätigt, verglichen mit dem Normalbetrieb der Kupplungssteuerung, verringert, so daß die Antriebsschlupfregelung Vorrang gewinnt und gegebenenfalls entgegenwirkendes Regelverhalten der Kupplungssteuerung ausgleichen kann.

Die Kupplungssteuerung kann für ein einziges dieser beiden Alternativen Systeme eingerichtet sein; es können aber auch beide Systeme an derselben Kupplungssteuerung verwirklicht sein, insbesondere in der Form, daß zunächst die erste Alternative wirksam wird und lediglich in bestimmten Betriebssituationen, beispielsweise solchen Betriebssituationen, die zum Abwürgen der Brennkraftmaschine führen, die zweite Alternative wirksam wird.

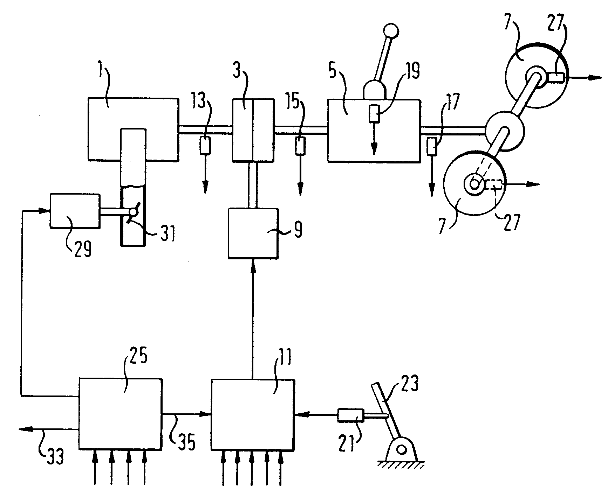

Im folgenden wird ein Ausführungsbeispiel der Erfindung anhand einer Zeichnung näher erläutert. Die Zeichnung zeigt in Form eines schematisierten Blockschaltbilds eine Kupplungsbetätigungsanordnung für ein mit einer Antriebsschlupfregelanordnung ausgerüstetes Kraftfahrzeug.

Das Kraftfahrzeug umfaßt eine Brennkraftmaschine 1, die über eine herkömmliche Reibungskupplung 3 und ein Schaltgetriebe 5 die Antriebsräder 7 des Kraftfahrzeugs antreibt. Die Reibungskupplung 3 wird von einem Stellantrieb 9 betätigt, der seinerseits von einer Steuerschaltung 11 gesteuert wird. Die Steuerschaltung 11 erfaßt mittels eines Drehzahlsensors 13 die Drehzahl der Brennkraftmaschine 1, mittels eines Drehzahlsensors 15 die Eingangsdrehzahl des Schaltgetriebes 5 und mittels eines Drehzahlsensors 17 die Fahrgeschwindigkeit. Ein Sensor 19 liefert der Steuerschaltung 11 eine Information über die momentane Gangstellung des manuell oder gegebenenfalls auch automatisiert schaltbaren Schaltgetriebes 5. Ein Sensor 21 liefert der Steuerschaltung 11 ein die momentane Stellung eines Fahrpedals 23 repräsentierendes Signal. Abhängig von den Signalen der Sensoren 13 bis 21 kuppelt die Kupplungssteuerung 11 die Reibungskupplung 3 betriebssituationsgerecht aus und ein. Die Reibungskupplung 3 wird beispielsweise ausgekuppelt, wenn die Motordrehzahl aufgrund zu geringer Fahrgeschwindigkeit bei eingelegtem Gang unter einen vorgegebenen Wert absinkt und die Brennkraftmaschine droht abgewürgt zu werden oder wenn durch Betätigen eines Schalthebelkontakts signalisiert wird, daß ein Gang gewechselt werden soll. Die Kupplungssteuerung 11 kuppelt sowohl beim Anfahren als auch beim Wechseln der Gänge selbsttätig und gegebenenfalls von unterschiedlichen Programmen gesteuert wieder ein.

Das Kraftfahrzeug umfaßt eine Antriebsschlupfregelanordnung mit einer Regelschaltung 25, die mittels Radsensoren 27 die momentane Raddrehzahl sowohl der angetriebenen Räder 7 als auch der nicht näher dargestellten nicht angetriebenen Räder des Kraftfahrzeugs erfaßt und aus zwischen den Rädern auftretenden Drehzahldifferenzen einen bestehenden oder gerade beginnenden Antriebsschlupf ermittelt. Im Falle eines Antriebsschlupfs erzeugt die Regelschaltung 25 ein erstes Steuersignal, das einem Stellantrieb 29 eines Leistungseinstellglieds 31 der Brennkraftmaschine 1, beispielsweise einer Drosselklappe oder eines Einspritzpumpenstellglieds, zugeführt wird.

Die Regelschaltung 25 mindert über den Stellantrieb 29 die Antriebsleistung der Brennkraftmaschine 1 soweit, bis kein oder im wesentlichen kein Antriebsschlupf mehr auftritt. Gegebenenfalls kann die Regelschaltung 25 auch nicht näher dargestellte Bremskraftsteller der Antriebsräder 7 über einen bei 33 angedeuteten Ausgang steuern.

Die Regelschaltung 25 liefert darüber hinaus an einem Ausgang 35 während der Dauer der Antriebsschlupfsituation ein zweites Steuersignal an die Kupplungssteuerung 11, die daraufhin den Stellantrieb 9 der Reibungskupplung 3 unabhängig davon, ob er bei Beginn des zweiten Steuersignals sich in Ruhe befunden hat oder die Kupplung gerade ein- oder ausrückt, in der momentanen Stellung festhält. Unabhängig vom Kupplungsbetrieb ist damit in der Antriebsschlupfsituation ausschließlich die Antriebsschlupfregelanordnung wirksam. Bei Beendigung der Antriebsschlupfsituation führt die Kupplungssteuerung 11 den unterbrochenen Kupplungsbetrieb entsprechend der dann gegebenen Betriebssituation fort. In jedem Fall wird der Kupplungsbetrieb jedoch unabhängig davon unterbrochen, ob die Sensoren 13 bis 21 eine Änderung der Kupplungseinstellung im Normalbetrieb bewirken würden, beispielsweise die Kupplung ausrücken würden, um ein Abwürgen der Brennkraftmaschine 1 zu verhindern.

Alternativ oder zusätzlich zur vorstehend erläuterten Betriebsweise der Kupplungssteuerung 11 im Falle einer Antriebsschlupfsituation, kann die Kupplungssteuerung 11 bei Vorliegen des zweiten Steuersignals der Antriebsschlupfregelung 25 auch mit einer verminderten Stellrate den Stellantrieb 9 entsprechend der durch die Sensoren 13 bis 21 erfaßten Betriebssituation weitersteuern. Die Stellrate ist jedoch so weit verringert, daß die Antriebsschlupfregelung 25 die eventuell durch den Kupplungsbetrieb 3 bewirkten Antriebsmomentänderungen sicher ausgleichen kann. Zweckmaßigerweise wird die letztgenannte Betriebsweise der Kupplungssteuerung 11 lediglich in bestimmten Betriebssituationen zusätzlich und zeitlich verzögert wirksam, beispielsweise dann, wenn die Brennkraftmaschine 1 abgewürgt zu werden droht.

## Patentansprüche

1. Anordnung zur Betätigung einer Reibungskupplung eines von einer Brennkraftmaschine angetriebenen und mit einer Antriebsschlupfregelanordnung ausgerüsteten Kraftfahrzeugs, umfassend
einen Stellantrieb für die Reibungskupplung,
mehrere auf Betriebsparameter des Kraftfahrzeugs, insbesondere die Drehzahl seiner Brennkraftmaschine und/oder die Eingangsdrehzahl und/oder Schaltstellung seines über die Reibungskupplung mit der Brennkraftmaschine gekuppelten Schaltgetriebes und/oder die Stellung seines Fahrpedals und/oder die Fahrgeschwindigkeit ansprechende Sensoren,
eine abhängig von den Sensoren mittels des Stellantriebs die Reibungskupplung auskuppelnde und sowohl beim Anfahren des Kraftfahrzeugs als auch beim Wechseln der Gänge des Schaltgetriebes selbsttätig einkuppelnde Kupplungssteuerung,
wobei die Antriebsschlupfregelanordnung eine mittels weiterer Sensoren, insbesondere Raddrehzahl-Sensoren, eine bestehende oder drohende Antriebsschlupfsituation erfaßt und hierauf ein erstes Steuersignal zur Verringerung der Antriebsleistung der Brennkraftmaschine erzeugt sowie ein zweites Steuersignal an die Kupplungssteuerung abgibt,
**dadurch gekennzeichnet,** daß die Antriebsschlupfregelanordnung das zweite Steuersignal während der Dauer der Antriebsleistungsminderung abgibt und die Kupplungssteuerung während des Auftretens des zweiten Steuersignals den Stellantrieb entweder unabhängig von der mittels eines der Sensoren erfaßten Drehzahl der Brennkraftmaschine und/oder der Fahrgeschwindigkeit in der bei Beginn des zweiten Steuersignals bestehenden Stellung halt oder abhängig von den die Betriebsparameter erfassenden Sensoren mit einer, verglichen mit der Stellrate des Stellantriebs bei fehlendem zweiten Steuersignal verringerten Stellrate in die der Betriebssituation zugeordnete Stellung steuert.

## Claims

1. Arrangement for actuating a friction clutch of a motor vehicle driven by an internal combustion engine and equipped with a driving slip regulating arrangement comprising
an actuating drive for the friction clutch,
a number of sensors responding to operating parameters of the vehicle, in particular the rotational speed of its engine and/or the input speed and/or gear position of its gearbox coupled to the engine through a friction clutch and/or the position of its accelerator pedal and/or the road speed,
a clutch control disengaging the friction clutch by means of the actuating drive independently of the sensors and automatically engaging it both on starting of the vehicle and also on a change of gear in the gearbox,
the driving slip regulating arrangement detecting by means of further sensors, in particular wheel speed sensors, an existing or threatened driving slip situation and thereupon producing a first control signal for reducing the driving power of the engine as well as a second control signal delivered to the clutch control,
**characterised in that**, the driving slip regulating arrangement produces the second control signal during the duration of the reduction in driving power and holds the actuating drive in the position which existed at the start of the second control signal during the presence of the second control signal either independently of the speed of the engine and/or road speed detected by one of the sensors, or, dependent on the sensors which detect the operating parameters, it controls it in the position associated with the operating situation at an adjusting rate which is reduced in comparison with the adjusting rate of the actuating drive in the absence of the second control signal.

## Revendications

1. Dispositif pour actionner un embrayage à friction d'un véhicule automobile mû par un moteur à combustion interne et équipé d'un dispositif de réglage antipatinage à l'entraînement, comprenant
un positionneur pour l'embrayage à friction,
plusieurs capteurs réagissant à des paramètres de fonctionnement du véhicule automobile, en particulier à la vitesse de rotation de son moteur à combustion interne et/ou la vitesse de rotation à l'entrée et/ou la position (rapport enclenché) de sa boîte de vitesses, accouplée par l'intermédiare de l'embrayage à friction au moteur à combustion interne, et/ou la position de sa pédale d'accélération et/ou la vitesse de roulement du véhicule,
une commande d'embrayage qui, en fonction des capteurs, débraie au moyen du positionneur l'embrayage à friction et embraie automatiquement à la fois au démarrage du véhicule et au changement des rapports de la boîte de vitesses,
le dispositif de réglage antipatinage à l'entraînement détectant, au moyen de capteurs supplémentaires, en particulier de capteurs pour les vitesses des roues, une situation de patinage d'entraînement existante ou menaçante et, à la suite d'une telle détection, génère un premier signal de commande afin de réduire la puissance de propulsion du moteur à combustion interne, et délivre un second signal de commande à la commande d'embrayage,
**caractérisé en ce que** le dispositif de réglage antipatinage à l'entraînement délivre le second signal de commande pendant la durée de la réduction de la puissance de propulsion et la commande d'embrayage, pendant l'application du second signal de commande, ou bien maintient le positionneur, indépendamment de la vitesse de rotation détectée au moyen d'un des capteurs du moteur à combustion interne et/ou de la vitesse de roulement, à la position existant au début de l'application du second signal de commande, ou alors amène le positionneur d la position coordonnée à la situation de marche, en fonction des capteurs détectant les paramètres de fonctionnement, à une vitesse de positionnement diminuée par rapport à la vitesse de positionnement en cas d'absence du second signal de commande.
